# EUROPEAN PATENT APPLICATION

(11) **EP 4 800 440 A2**
(43) Date of publication of application: **02.09.2026**
(21) Application number: 26191300.8
(22) Date of filing: 02.04.2023
(51) Int. Cl.: G02B 3/00

(54) **DISPLAYS EMPLOYING DICHROIC COMBINERS INTEGRATED WITH A LIGHTGUIDE**

(30) Priority: 03.04.2022 US 202263326864 P; 26.04.2022 US 202263334694 P; 18.05.2022 US 202263343100 P
(62) Document number(s) of the earlier application(s) in accordance with Art. 76 EPC: 23784468.3 / 4 377 746
(71) Applicant: Lumus Ltd., 7403631 Ness Ziona (IL)
(72) Inventor: DANZIGER, Yochay, 2514700 Kfar Vradim (IL); SHARLIN, Elad, 7684100 Mishmar David (IL)
(74) Representative: Becker Kurig & Partner Patentanwälte mbB

(57) **Abstract**

A display includes a lightguide (10, 110) with mutually-parallel major surfaces and at least two image projectors (2a, 2b, 2c) outputting collimated light of at least first and second colors, respectively. In one embodiment, the two image projectors introduce the collimated light so as to propagate within the lightguide along the same in-plane direction. Interference of one of the coupling-in arrangements with internal reflection of the other color is avoided by providing a dichroic reflector (9a1, 9b1, 9a2, 9b2, 9a3) coplanar with a major surface of the lightguide. Alternatively, or additionally, the two colors may be introduced so as to propagate in two non-parallel directions, and are combined by a dichroic reflector (12a, 12b) embedded within the lightguide. Also disclosed is a display with an optical relay (66a, 66b) for transferring images between two non-parallel lightguides (110a and 110b, 10).

## Description

### FIELD AND BACKGROUND OF THE INVENTION

The present invention relates to displays and, in particular, it concerns displays employing dichroic combiners integrated with a lightguide and/or employing optical relays between rectangular lightguides.

A number of different projector technologies are used in augmented reality displays. Some of these, such as micro-LED arrays, are typically limited to generating a monochromatic image. In order to provide the user with a color image, three micro-LED arrays of three different colors are typically used. However, the combining optics required to combine the three colors can make the image projector bulky. This is particularly problematic for near-eye displays, where the components should be as compact as possible to minimize the size and weight of the display.

### SUMMARY OF THE INVENTION

The present invention is a display employing one or more dichroic combiners integrated with a lightguide and/or employing an optical relay between rectangular lightguides.

According to the teachings of an embodiment of the present invention there is provided, a display comprising: (a) a lightguide having a pair of mutually-parallel major surfaces supporting propagation of light within the lightguide by internal reflection at the major surfaces; (b) a first image projector comprising a first monochrome image generator and first collimating optics, the first image projector outputting collimated light of a first color corresponding to a first component of an image, the first image projector being optically coupled to the lightguide so as to introduce the collimated light of the first color into the lightguide so as to propagate within the lightguide in a first in-plane direction; (c) a second image projector comprising a second monochrome image generator and second collimating optics, the second image projector outputting collimated light of a second color corresponding to a second component of the image, the second image projector being optically coupled to the lightguide so as to introduce the collimated light of the second color into the lightguide so as to propagate within the lightguide in a second in-plane direction non-parallel to the first in-plane direction; and (d) a dichroic reflector embedded in the lightguide, oriented perpendicular to the major surfaces and bisecting an angle between the first in-plane direction and the second in-plane direction, the dichroic reflector being transparent to the first color and reflective to the second color so as to redirect the light of the second color so as to combine with the light of the first color and to propagate within the lightguide in the first direction.

According to a further feature of an embodiment of the present invention, there is also provided a first set of mutually-parallel partially-reflecting surfaces embedded in the lightguide for progressively redirecting light of both the first color and the second color so as to propagate in a deflected direction within the lightguide, the first set of partially-reflecting surfaces being parallel to the dichroic reflector.

According to a further feature of an embodiment of the present invention, a length of a light path from the first image projector to the dichroic reflector is equal to, or differs by less than 20 percent from, a length of a light path from the second image projector to the dichroic reflector.

According to a further feature of an embodiment of the present invention, there is also provided: (a) a third image projector comprising a third monochrome image generator and third collimating optics, the third image projector outputting collimated light of a third color corresponding to a third component of the image, the third image projector being optically coupled to the lightguide so as to introduce the collimated light of the third color into the lightguide so as to propagate within the lightguide in a third in-plane direction; and (b) a second dichroic reflector embedded in the lightguide, oriented perpendicular to the major surfaces and configured to redirect the light of the third color so as to combine the light of the third color with the light of at least one of the first and second colors, such that the dichroic reflector and the second dichroic reflector together combine light of the first, the second and the third colors.

According to a further feature of an embodiment of the present invention, the third direction is parallel to the second direction, and wherein the second dichroic reflector is parallel to the dichroic reflector.

According to a further feature of an embodiment of the present invention, the collimated light of at least one of the first and second colors propagates within a first region of the lightguide, the display further comprising: (a) a third image projector comprising a third monochrome image generator and third collimating optics, the third image projector outputting collimated light of a third color corresponding to a third component of the image, the third image projector being optically coupled to the lightguide so as to introduce the collimated light of the third color through a coupling-in area of a first of the major surfaces in the first region of the lightguide so as to propagate within the lightguide together with the light of the at least one of the first and second colors; and (b) an in-plane dichroic reflector associated with the coupling-in area and coplanar with the first major surface of the lightguide, the in-plane dichroic reflector being reflective to the at least one of the first and second colors so as to support propagation of the light of the at least one of the first and second colors through the first region by internal reflection within the lightguide and being transparent to the third color so as to allow coupling-in of the light of the third color into the lightguide.

According to a further feature of an embodiment of the present invention, there is also provided a rectangular lightguide having a first pair of parallel surfaces and a second pair of parallel surfaces that are perpendicular to the first pair of parallel surfaces, and wherein the lightguide is coupled to the rectangular lightguide so as to introduce the light of the first and second colors into the rectangular lightguide so as to propagate within the rectangular lightguide by four-fold internal reflection.

There is also provided according to the teachings of an embodiment of the present invention, a display comprising: (a) a lightguide having first and second mutually-parallel major surfaces supporting propagation of light within the lightguide by internal reflection at the first and second major surfaces; (b) a first image projector comprising a first monochrome image generator and first collimating optics, the first image projector outputting collimated light of a first color corresponding to a first component of an image, the first image projector being optically coupled to the lightguide so as to introduce the collimated light of the first color into the lightguide so as to propagate within a first region of the lightguide in a first in-plane direction; (c) a second image projector comprising a second monochrome image generator and second collimating optics, the second image projector outputting collimated light of a second color corresponding to a second component of the image, the second image projector being optically coupled to the lightguide so as to introduce the collimated light of the second color through a coupling-in area of the first major surface in the first region of the lightguide so as to propagate within the lightguide in the first in-plane direction together with the light of the first color; and (d) a dichroic reflector associated with the coupling-in area and coplanar with the first major surface of the lightguide, the dichroic reflector being reflective to the first color so as to support propagation of the light of the first color through the first region by internal reflection within the lightguide and being transparent to the second color so as to allow coupling-in of the light of the second color into the lightguide.

According to a further feature of an embodiment of the present invention, the second image projector is optically coupled to the lightguide via a transmissive prism attached at the coupling-in area.

According to a further feature of an embodiment of the present invention, the second image projector is optically coupled to the lightguide via a reflector surface that is integrated with a prism attached at the coupling-in area.

According to a further feature of an embodiment of the present invention, the second image projector is deployed to inject the light of the second color via the second major surface such that the light of the second color traverses a thickness of the lightguide, is transmitted by the dichroic reflector, is reflected by the reflector surface and is again transmitted by the dichroic reflector so as to be coupled into the lightguide.

According to a further feature of an embodiment of the present invention, the light of the first and second colors propagate together within a second region of the lightguide in the first in-plane direction, the display further comprising: (a) a third image projector comprising a third monochrome image generator and third collimating optics, the third image projector outputting collimated light of a third color corresponding to a third component of the image, the third image projector being optically coupled to the lightguide so as to introduce the collimated light of the third color through a second coupling-in area of the first major surface or the second major surface in the second region of the lightguide so as to propagate within the lightguide in the first in-plane direction together with the light of the first and second colors; and (b) a second dichroic reflector associated with the second coupling-in area and substantially coplanar with the first major surface or the second major surface, the second dichroic reflector being reflective to the first and second colors so as to support propagation of the light of the first and second colors through the second region by internal reflection within the lightguide and being transparent to the third color so as to allow coupling-in of the light of the third color into the lightguide.

According to a further feature of an embodiment of the present invention, the coupling-in area and the second coupling-in area are in overlapping relation on opposite major surfaces of the lightguide.

According to a further feature of an embodiment of the present invention, there is also provided a rectangular lightguide having a first pair of parallel surfaces and a second pair of parallel surfaces that are perpendicular to the first pair of parallel surfaces, and wherein the lightguide is coupled to the rectangular lightguide so as to introduce the light of the first and second colors into the rectangular lightguide so as to propagate within the rectangular lightguide by four-fold internal reflection.

According to a further feature of an embodiment of the present invention, an end of the rectangular lightguide is optically coupled to a slab lightguide having a coupling-out configuration for coupling out light propagating within the slab lightguide towards an eye of a user.

According to a further feature of an embodiment of the present invention, there is also provided a set of mutually-parallel partially-reflecting coupling-out surfaces embedded in the lightguide at an oblique angle to the major surfaces so as to progressively reflect light of both the first color and the second color propagating within the lightguide so as to redirect the light out from the lightguide towards an eye of a user.

There is also provided according to the teachings of an embodiment of the present invention, a lightguide arrangement comprising: (a) a first rectangular lightguide having a first pair of parallel surfaces and a second pair of parallel surfaces that are perpendicular to the first pair of parallel surfaces for supporting propagation of light by four-fold internal reflection, the first rectangular lightguide having a first direction of extension parallel to a line of intersection between one of the first pair of parallel surfaces and one of the second pair of parallel surfaces; (b) a second lightguide having at least a first pair of parallel surfaces for supporting propagation of light by internal reflection, the first pair of parallel surfaces being non-parallel to the first direction of extension; and (c) an optical relay optically coupled between the first rectangular lightguide and the second lightguide, the optical relay relaying a collimated image propagating within the first rectangular lightguide via a real image plane to a collimated image propagating within the second lightguide.

According to a further feature of an embodiment of the present invention, the optical relay is configured to image an output aperture plane of the first rectangular lightguide to an input aperture plane of the second lightguide.

According to a further feature of an embodiment of the present invention, the optical relay has unit magnification.

According to a further feature of an embodiment of the present invention, the optical relay is optically symmetrical about the real image plane.

According to a further feature of an embodiment of the present invention, the optical relay is optically coupled to each of the first rectangular lightguide and the second lightguide via a coupling prism.

According to a further feature of an embodiment of the present invention, the optical relay includes a polarizing beam splitter prism with reflective lenses on two faces of the prism.

According to a further feature of an embodiment of the present invention, the second lightguide is a rectangular lightguide having a second pair of mutually-parallel major surfaces that are perpendicular to the first pair of major surfaces for supporting propagation of light by four-fold internal reflection.

According to a further feature of an embodiment of the present invention, the optical relay further comprises a beam spreading element deployed at the real image plane.

### BRIEF DESCRIPTION OF THE DRAWINGS

The invention is herein described, by way of example only, with reference to the accompanying drawings, wherein:
FIG. 1A is a schematic side view of a prism-based coupling-in arrangement, employed in certain implementations of the present invention, for coupling a collimated image from an image projector into a lightguide;
FIG. 1B is a schematic side view of a reflective coupling-in arrangement, employed in certain implementations of the present invention, for coupling a collimated image from an image projector into a lightguide;
FIG. 1C is a schematic illustration of a collimated-image projector suitable for use in certain embodiments of the present invention;
FIG. 2A is a schematic front view of a display, constructed and operative according to a first embodiment of the present invention, employing dichroic combiners integrated with a lightguide;
FIG. 2B is an enlarged view of selected elements from FIG. 2A illustrating the angular relation between the components;
FIG. 3 is a schematic front view of a display, constructed and operative according to a second embodiment of the present invention, employing dichroic combiners integrated with a lightguide;
FIG. 4 is a schematic partial side view of a coupling-in region of the lightguide of FIG. 3;
FIG. 5 is a schematic front view of a display, constructed and operative according to a further embodiment of the present invention, which combines features from the embodiments of FIGS. 2 and 3;
FIG. 6A and 6B are two additional schematic partial side views of a display according to further implementations of the present invention showing various combinations of prism-based and/or reflective coupling-in arrangements from both sides of a lightguide;
FIG. 7 is a further schematic partial side view of a display according to a further implementation of the present invention showing combination of two monochromatic images prior to coupling-in to a light-guide;
FIG. 8 is a further schematic front view of a display according to a further implementation of the present invention showing a coupling-in arrangement similar to that of FIG. 3 combined with a diffractive optical element for expanding an optical aperture of the injected images via a pair of diffractive redirections of light propagating within the lightguide;
FIGS. 9A and 9B are schematic front and side views, respectively, of a display according to a further implementation of the present invention in which image light is coupled into a rectangular lightguide;
FIGS. 10A and 10B are schematic partial front and isometric views of a coupling-in configuration for coupling multiple monochromatic images into the rectangular lightguide of FIG. 9A;
FIG. 10C is a front view of a variant of the coupling-in configuration of FIG. 10A;
FIG. 11A is a schematic isometric view of a further variant of the coupling-in configuration of FIG. 10A illustrating two-sided coupling-in;
FIG. 11B is a schematic partial isometric view of the coupling-in configuration of FIG. 11A shown integrated with adjacent light-guide elements;
FIGS. 12A and 12B are schematic partial front and isometric views of an alternative coupling-in configuration for coupling multiple monochromatic images into the rectangular lightguide of FIG. 9A;
FIG. 12C is a front view of a variant of the coupling-in configuration of FIG. 12A;
FIGS. 13A and 13B are schematic partial front and isometric views of a further alternative coupling-in configuration for coupling multiple monochromatic images into the rectangular lightguide of FIG. 9A;
FIGS. 14A and 14B are schematic top and front views of a variant implementation of a display in which a rectangular lightguide is used to couple an image into an aperture expansion lightguide similar to that of FIGS. 2A and 3;
FIGS. 14C and 14D are schematic top and front views of a variant implementation of the display of FIGS. 14A and 14B;
FIG. 15A is a schematic top view of a display employing an optical relay to transfer image light from a first rectangular lightguide to a second lightguide that is angled relative to the first lightguide;
FIG. 15B is a schematic top view similar to FIG. 15A where the optical relay is implemented using a PBS prism and reflective optics;
FIG. 16 is a schematic isometric view of an arrangement similar to FIG. 15A employing right-angle reflector prisms for coupling in and out of the rectangular lightguides; and
FIG. 17 is a schematic isometric view similar to FIG. 16 in which the second lightguide is a slab lightguide.

### DESCRIPTION OF THE PREFERRED EMBODIMENTS

The present invention is a display employing one or more dichroic combiners integrated with a lightguide and/or employing an optical relay between rectangular lightguides.

The principles and operation of displays according to the present invention may be better understood with reference to the drawings and the accompanying description.

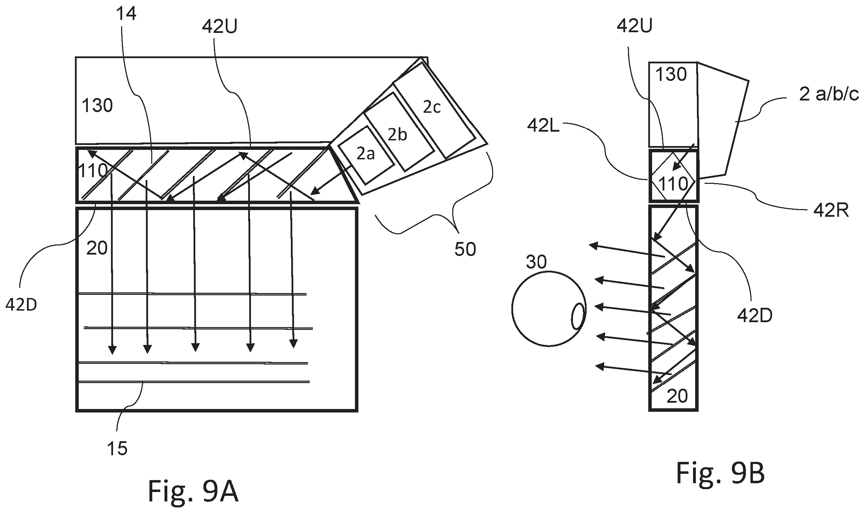

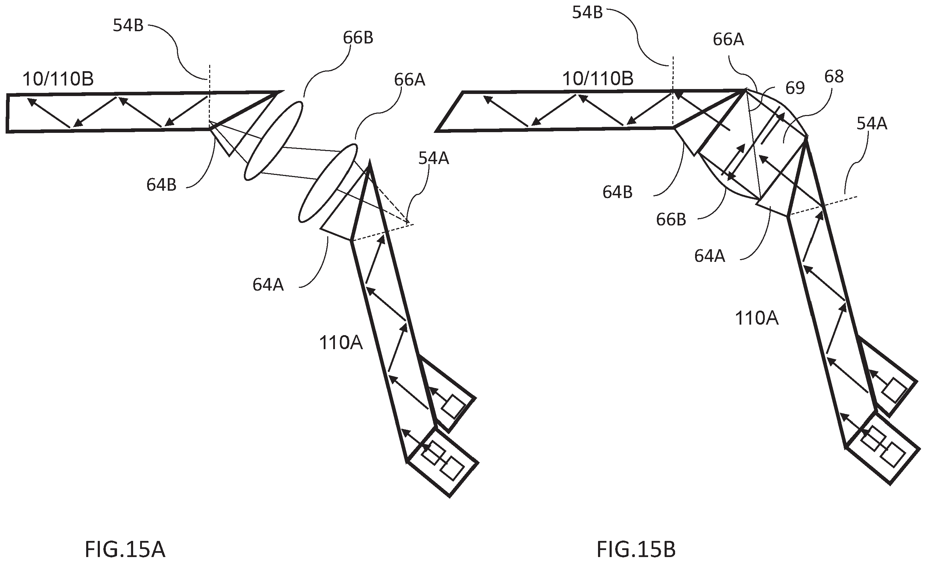

By way of introduction, various aspects of the present invention relate to displays in which one or more dichroic combiners are integrated with a lightguide for combining partial images from two or more monochrome image projectors. This typically offers a significantly more compact implementation than could be achieved by using conventional dichroic prism arrangements to combine all of the colors prior to injection of the image into a lightguide. Some of the lightguide arrangements disclosed herein with reference to FIGS. 9A-14D also employ rectangular lightguides which guide image light by four-fold internal reflection. A further aspect of the invention, useful in synergy with the arrangements of FIGS. 9A-14D, or in other contexts employing a rectangular lightguide, provides an optical relay between such a rectangular lightguide and another slab-type, or rectangular, lightguide, to achieve coupling between non-parallel lightguides, as will be described with reference to FIGS. 15A and 15B.

In the context of combining monochrome images, reference may be made herein to a "color display." The term "color display" is used herein to refer to any display which is not monochrome, even if it combines only two visible colors. The term "full color display" will be used to refer specifically to a display capable of displaying a combination of three visible colors, typically red, green and blue (RGB), which can be combined to generate a perception of white.

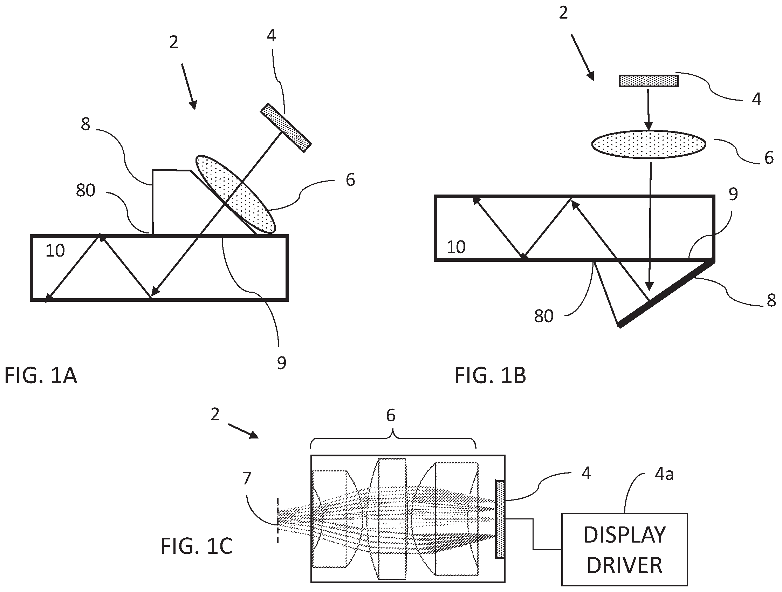

A particularly-preferred but non-limiting example of a monochrome image source for use in various implementations of the present invention is a micro-LED (MLED) array, which provides a matrix of actively-illuminating pixels. FIG. 1C illustrates a typical monochrome image projector (or "display module") **2** based on an MLED array **4** combined with collimating optics **6**, which is configured to collimate light from each pixel of the MLED array **4** into a collimated beam. Collimating optics **6** is preferably configured to have a forward-projected aperture **7** through which the collimated beams corresponding to all of the pixels are projected. The MLED array is actuated to generate the required image (or typically, the color separation which is part of the final desired image) by a display driver **4a**, which includes electronic circuitry for this purpose as is well-known in the art. Elsewhere in this document, for simplicity of presentation, each image projector **2** is represented only schematically, being shown in side views as an MLED array **4** and a single lens schematically representing collimating optics **6**, and in plan views simply as a rectangular block. A color image is achieved by combining the light from separate matrices each generating a color separation of the desired image in a single color.

Collimated image light from MLEDs can be coupled into a lightguide to be transmitted to a near eye display or for head-up displays. FIG. 1A shows module **2** where light from MLED **4** is collimated by collimating optics **6** and injected via a coupling prism **8** which is attached at an interface surface **9** into lightguide **10**. Arrows represent schematically beams which propagate from the MLED into lightguide **10** and thereafter propagate by internal reflection within lightguide **10**.

FIG. 1B shows an alternative configuration where prism **8** provides a reflecting surface. Throughout this document, except where otherwise stated, these two options of coupling-in via a transmissive prism or a reflective prism/surface are considered interchangeable, and where one is illustrated, an additional variant employing the alternative coupling-in configuration for some or all of the coupling-in locations is explicitly envisaged.

In both the configuration of FIG. 1A and of FIG. 1B, corner **80** serves to trim the incident light-beams so that excess/unwanted light is not coupled into the lightguide.

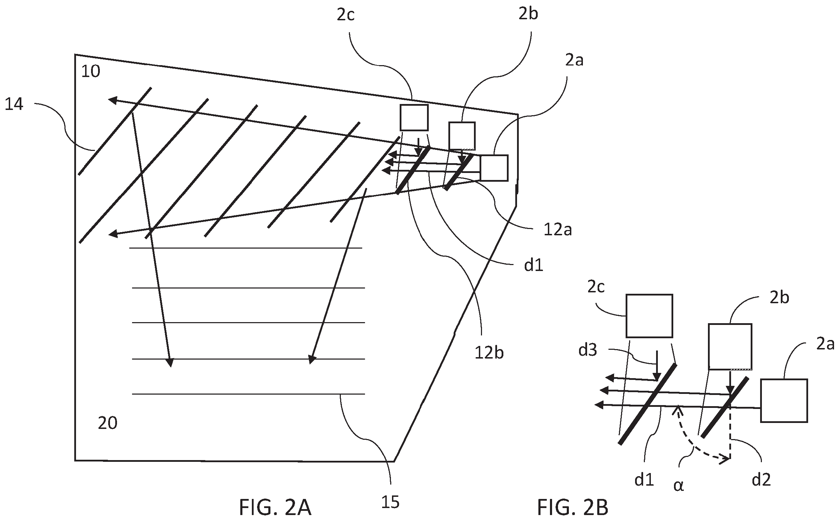

Turning now to FIGS. 2A and 2B, these illustrate a display, constructed and operative according to a first aspect of the present invention, in which images from at least two, and preferably three, monochrome image projectors (modules **2a**, **2b** and **2c**), each project an image of a different color into a lightguide **10**, where the images are combined by embedded dichroic reflectors **12a** and **12b** within the lightguide, and are expanded before being coupled-out towards the eye of a user. Each module has the same architecture as illustrated either in FIG. 1A or in FIG. 1B, and the two module types can be mixed.

Lightguide **10** has a pair of mutually-parallel major surfaces (front and back surfaces in the front view shown here, that supporting propagation of light within the lightguide by internal reflection at the major surfaces. The arrows shown here represent guided light within lightguide **10**, i.e., that is propagating by internal reflection from the front and back major surfaces of the lightguide, and only the "in-plane component" of the light rays, i.e., the component that is parallel to the major surfaces, is illustrated.

Thus, the first image projector **2a**, including a first monochrome image generator and first collimating optics, outputs collimated light of a first color corresponding to a first component of an image, and is optically coupled to lightguide **10** so as to introduce the collimated light of the first color into the lightguide so as to propagate within the lightguide in a first in-plane direction **d1**. The direction **d1** referred to here corresponds to a representative central direction or "chief ray" of the collimated image, which also includes a range of other directions, as indicated by the edge-of-field ray arrows, on either side of **d1**.

The second image projector **2b**, including a second monochrome image generator and second collimating optics, outputs collimated light of a second color corresponding to a second component of the image. Second image projector **2b** is optically coupled to lightguide **10** so as to introduce the collimated light of the second color into the lightguide so as to propagate within the lightguide in a second in-plane direction **d2**, non-parallel to the first in-plane direction **d1**. A dichroic reflector **12a**, embedded in lightguide **10**, is oriented perpendicular to the major surfaces and bisecting an angle α between the first in-plane direction and the second in-plane direction. Dichroic reflector **12a** is transparent to the first color and reflective to the second color so as to redirect the light of the second color so as to combine with the light of the first color and to propagate within the lightguide in the first direction **d1**. This is illustrated most clearly in FIG. 2B.

In a preferred implementation of a three-color display as illustrated here, a third image projector **2c**, including a third monochrome image generator and third collimating optics, outputs collimated light of a third color corresponding to a third component of the image. Third image projector **2c** is optically coupled to the lightguide so as to introduce the collimated light of the third color into the lightguide so as to propagate within the lightguide in a third in-plane direction **d3** non-parallel to the first in-plane direction **d1**. A second dichroic reflector **12b**, embedded in the lightguide, is oriented perpendicular to the major surfaces and bisecting an angle between the first in-plane direction **d1** and the third in-plane direction **d3**. Most preferably, third in-plane direction **d3** is parallel to second in-plane direction **d2**, and second dichroic reflector **12b** is parallel to dichroic reflector **12a**. Second dichroic reflector **12b** is transparent to the first and second colors and reflective to the third color so as to redirect the light of the third color so as to combine with the light of the first and second colors and to propagate within the lightguide in the first direction **d1**.

In certain preferred implementations, the coupling-in of light from at least the first and second image projectors and the deployment of the dichroic reflector are such that a length of a light path from the first image projector **2a** to the dichroic reflector **12a** is equal to, or differs by less than 20 percent from, a length of a light path from the second image projector **2b** to the dichroic reflector **12a**. This helps to maximize the area of overlap of the images. Most preferably, the length of the light path from all three image projectors to second dichroic reflector **12b** is also equal or differs by less than 20 percent. In this context, it will be noted that the front view of FIGS. 2A and 2B (besides being only schematic) cannot be used to assess the length of the light path, since this depends also on the selected coupling-in geometry. For example, if modules **2a** and **2b** employ the prism coupling of FIG. 1A while module **2c** employs the reflective coupling-in of FIG. 1B, the light path for the image from module **2c** may be longer than it appears in the front view.

In one particularly-preferred but non-limiting implementation illustrated here, lightguide **10** is part of a two-dimensional aperture expansion lightguide arrangement, which includes a first set of mutually-parallel partially-reflecting surfaces **14** embedded in lightguide **10** for progressively redirecting the light of all colors so as to propagate in a deflected direction within the lightguide, so that the in-plane direction of propagation is generally downwards in the drawing as shown, and a coupling-out arrangement, here illustrated as a second set of mutually-parallel partially-reflecting surfaces **15**, located within a second portion **20** of the lightguide and deployed obliquely to the major surfaces so as to progressively redirect part of the light propagating within the second portion **20** so as to be coupled out of the lightguide towards the eye of a user. Partially-reflecting surfaces **15** are preferably implemented with angularly-selective partially-reflecting coatings, typically implemented using multilayer dielectric coatings as is known in the art, so as to selectively couple-out the desired image light while being transparent to incident angles corresponding to the inverted form of the image generated during propagation by internal reflection within the lightguide.

The partially-reflecting internal surfaces **14** and **15** are shown only schematically, and would generally need to be more closely spaced in order to provide continuous coverage of the image reaching the eye of the user. These and other details and variant implementation geometries for the two-dimensional aperture expansion lightguide may be found in previous documents, such as US Patent No. 10,739,512, and may be found in products commercially-available from LUMUS Ltd. (Israel).

In such embodiments, it is particularly advantageous that the dichroic reflector(s) **12a** and/or **12b** are parallel to the first set of partially-reflecting surfaces **14**. This allows the entire lightguide region **10** to be manufactured as a stack of pre-coated parallel-faced plates, preferably also bonded to a block containing coupling-out reflectors **15**, which is then sliced and polished to make multiple lightguides simultaneously.

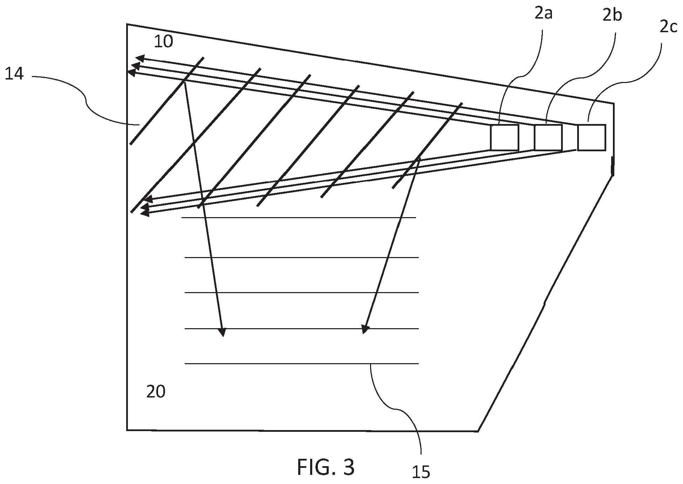

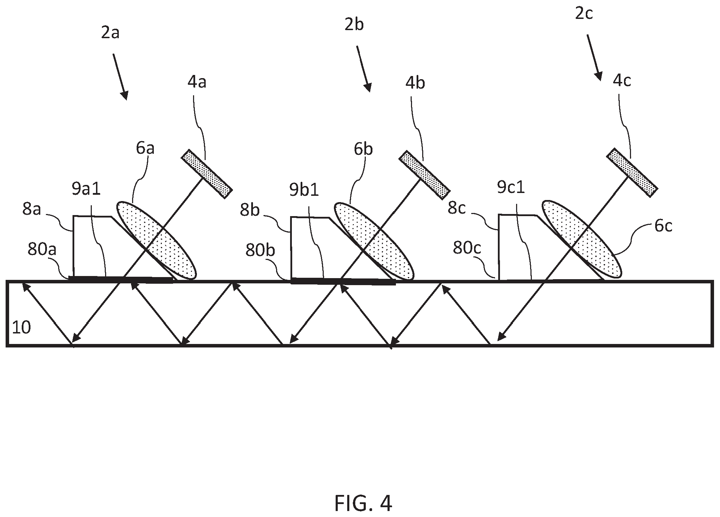

Turning now to FIGS. 3 and 4, these show an alternative embodiment according to a further aspect of the present invention in which at least two, and preferably three, monochrome image projectors for different colors are combined in tandem onto lightguide **10** and introducing the image light propagating in the same direction. Here module **2b** is placed behind **2a**, while **2c** is placed behind **2b**. This tandem arrangement enables different placement of the modules. Assuming the modules have the same angular divergence, there may be some mismatch in the beam distribution within the waveguide. This can be compensated for by appropriate length of facets **14**.

FIG. 4 shows a cross-section of the tandem modules in FIG. 3. It is a particular feature of this aspect of the present invention that the interface surface that was labeled **9** in either FIG. 1A or 1B for at least one of the coupling configurations is implemented with a dichroic coating that allows injection of the monochrome image from the corresponding image projector while maintaining internal reflection conditions for another previously-injected color image propagating within the lightguide. Thus, in the case of FIG. 4, interface **9a1** includes a dichroic-coating that transmits light from **2a** but reflects light from **2b** and from **2c**. Interface **9b1** includes a dichroic-coating that transmits light from **2b** and reflects light from **2c**. The interface **9c1** may be simply transmissive. Here, every module has its own trimming corner **80a**, **80b** and **80c**.

In each of interfaces **9a1** and **9b1**, the dichroic coating provides a dichroic reflector that is associated with the corresponding coupling-in area of the image projector and is coplanar with one of the major surfaces of the lightguide **10**. The coating can most conveniently be applied to the coupling prism **8a** and **8b** prior to bonding of the prisms to the lightguide.

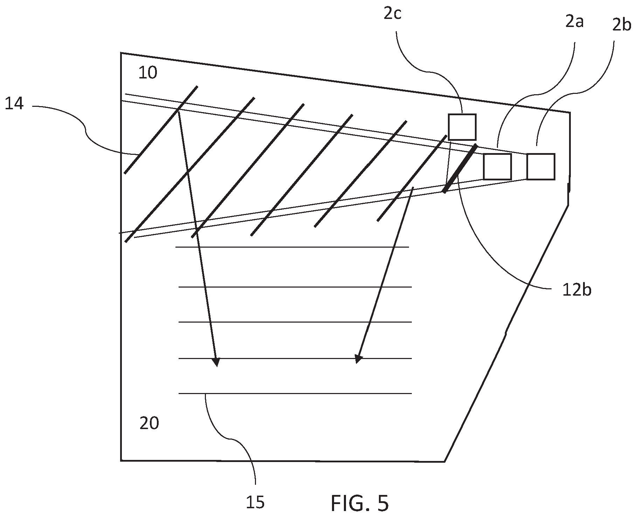

FIG. 5 illustrates a further implementation of the present invention in which the principles described above with reference to FIGS. 2 and 3 are combined. Specifically, in the case illustrated in FIG. 5, two modules **2a** and **2b** are deployed in tandem, injecting their respective images along the same direction, while module **2c** injects an image in a non-parallel direction and employs embedded dichroic combiner **12b** to reflect the color from image projector **2c** while transmitting the light from projectors **2a** and **2b**. This enables simplification of the coating designs for both interface surface **9a1** and for dichroic combiner **12b**, since each is required to be reflective in only a single narrow band of wavelengths. This configuration may also facilitate more compact placement of the modules.

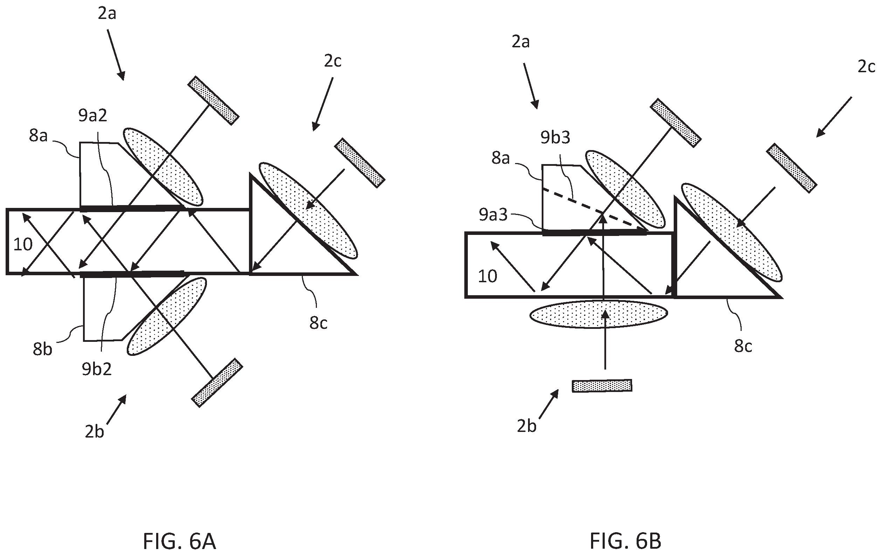

FIG. 6A shows a further configuration based on the principles of FIG. 3, but where the coupling-in area (interface **9a2**) for module **2a** and the coupling-in area (interface **9b2**) for module **2b** are in overlapping relation on opposite major surfaces of the lightguide **10**. "Overlapping relation" in this context refers to overlap of the areas as projected in a direction perpendicular to the major surfaces of the waveguide. In a particularly preferred implementation, the two modules are exactly opposite (substantially complete overlap). This facilitates achieving the same optical path for light from the two opposing modules whereby the beams along lightguide **10** will overlap. In this case, the dichroic coating at interface **9b2** should also reflect light from module **2a** in addition to reflecting light from module **2c**, while interface **9a2** should reflect light from both modules **2b** and **2c**. This arrangement also enables placement of coupling of module **2c** close to the other modules, thereby improving overlap of beams from module **2c** with the beams from modules **2a** and **2b**. Alternatively, light from module **2c** may be combined with the other images by using an embedded dichroic combiner **12b** as illustrated in FIG. 5, in which case the light path for all three modules may be equal.

Turning to FIG. 6B, this illustrates an arrangement generally similar to FIG. 6A, but in which module **2b** employs reflective coupling-in (equivalent to FIG. 1B), with the image light being transmitted through the thickness of lightguide **10** and reflected from a reflector surface **9b3** that is integrated with prism **8a**. In this particular case, since prism **8a** also serves as a coupling-in prism for module **2a**, reflector surface **9b3** is implemented as a dichroic reflector that reflects the light from module **2b** and transmits the light from module **2a**, and is embedded at the required angle within prism **8a**. A dichroic coating at interface **9a3** is designed to transmit light from modules **2a** and **2b** while reflecting light from module **2c**.

As a result of this structure, the light from module **2a** is coupled-in through prism **8a**, being transmitted by both surfaces **9b3** and **9a3**. The light from module **2b** is injected by the second image projector via the lower (as shown) major surface, traverses the thickness of lightguide **10**, is transmitted by the dichroic reflector at interface **9a3**, reflected by the reflector surface **93b**, and is again transmitted by the dichroic reflector at interface **9a3** so as to be coupled into lightguide **10**. The light from module **2c** is coupled-in as in FIG. 6A via a coupling-in prism **8c** (in this non-limiting case, attached to an edge of the lightguide), and then propagates along lightguide **10**, being reflected by the dichroic reflector at interface **9a3** so as to continue within the light guide unaffected by the presence of prism **8a**.

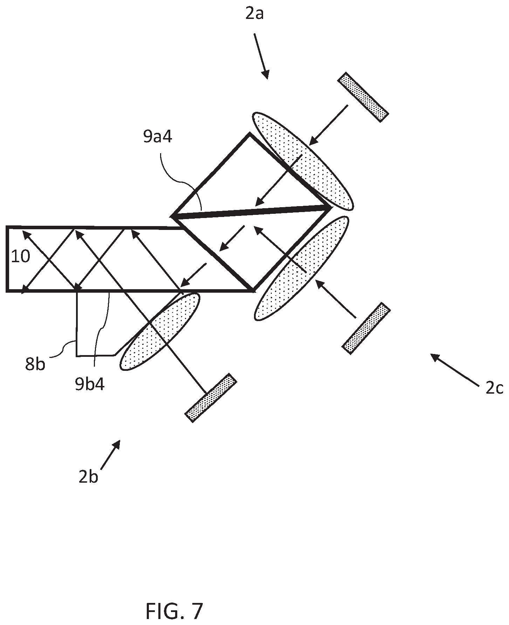

FIG. 7 shows a further variant coupling-in arrangement in which the light from modules **2a** and **2c** are combined by using a dichroic cube with a dichroic reflector **9a4** which transmits the light from module **2a** and reflects the light from module **2c**. The dichroic cube is coupled to a surface of lightguide **10** so as to introduce the combined images into the lightguide to propagate within the lightguide.

FIGS. 4 and 6A-7 have selectively illustrated only the coupling-in region of the display system in order to show clearly the exemplary coupling-in architecture options. Each of these configurations may be used to advantage with a two-dimension aperture expansion lightguide as was illustrated in FIGS. 2A, 3 or 5, or with any of the alternative lightguide arrangements that will be described below.

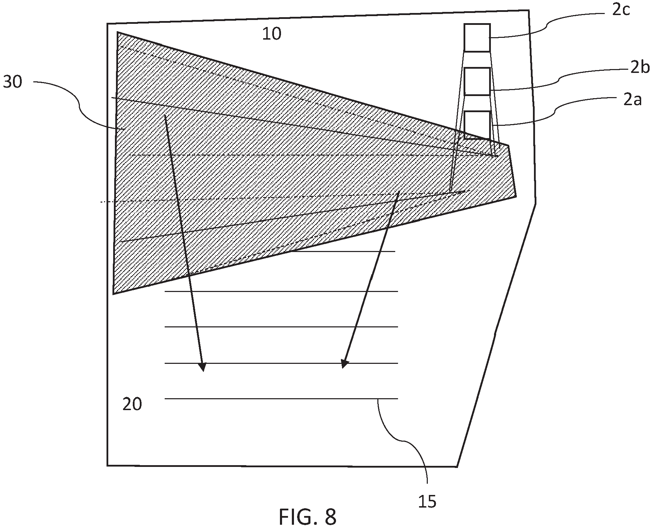

Turning now to FIG. 8, this illustrates a further preferred but non-limiting implementation that is generally similar to FIG. 3, but employs a diffractive arrangement **30** for aperture expansion within lightguide **10** instead of partial reflectors **14**. Diffractive arrangement **30** deflects the light from the modules **a1**, **a2** and **a3** latterly at different angles, since diffraction effects are highly wavelength-dependent. However, diffractive arrangement **30** is deployed so that it subsequently diffracts a second time, returning the rays to their original (pre-diffraction) direction of propagation within the lightguide, and thereby compensates for spectral dependences of the diffraction angle. The location and configuration for deployment of the diffractive arrangement **30** can vary and are shown only schematically in this Figure. The coupling-out arrangement is preferably a set of partially-reflecting obliquely-angled internal surfaces **15**, as described above, which avoids introducing any chromatic distortion.

Turning now to FIGS. 9A-13B, certain display systems employ a rectangular lightguide having a first pair of parallel surfaces and a second pair of parallel surfaces that are perpendicular to the first pair of parallel surfaces, so as to support propagation of light within the rectangular lightguide by four-fold internal reflection. Rectangular lightguides have the particular advantage that rays at different angles corresponding to different parts of the field of view of the image are contained within the lightguide, and therefore do not diverge in the same manner as they do in the in-plane dimension of a slab-type lightguide. Extensive examples of systems employing rectangular lightguides may be found in US Patent No. 10,133,070 to LUMUS Ltd. A further aspect of the present invention provides various solutions for effective and compact coupling-in of images from two or more monochrome image projectors into a rectangular lightguide, as will now be presented with reference to FIGS. 9A-13B.

For the purpose of this description, lightguides such as those described above (regions **10** and **20**) which are defined by two reflecting surfaces are referred to herein as "1D lightguides," in the sense that they guide and limit light propagating within the lightguide in one dimension, but the light diverges in the other (in-plane) dimension. Rectangular lightguides, defined by four reflecting surfaces creating a rectangular cross-section, are referred to herein as "2D lightguides," in the sense that they guide and limit divergence of light in two dimensions as it propagates along the lightguide. In FIGS. 9A and 9B, and in the subsequent Figures, these surfaces are marked 42U, 42D, 42L and 42R.

FIGS. 9A and 9B show an implementation of coupling MLEDs into a 2D lightguide **110**. Modules **2a**, **2b** and **2c** can be coupled in various ways into the 2D lightguide. The light propagates in the 2D lightguide in four-fold configuration as shown in lightguide **110** in FIG. 9B. The partially-reflecting surfaces (referred to interchangeably as "facets") **14** in lightguide **110** reflect the light so as to couple it out of lightguide **110** into the 1D lightguide **20** that guides the light until it is progressively redirected by reflection from partially-reflecting surfaces **15** towards the observer's eye **30**. Section **130** shown here is an inert block of glass or other material which serves to protect lightguide **110** and to support the section **50** at which the MLED projector modules are coupled-in. Internal reflection at surfaces **42U** and **42D** is preferably preserved either by leaving an air gap or, more preferably from a structural point of view, by use of a layer of low refractive index adhesive or other low-index material between lightguide **110** and the adjacent elements (lightguide **20** and block **130**).

Certain preferred configurations for coupling into the 2D lightguide are based on two steps, first coupling into a 1D lightguide in a manner similar to the previous Figures, followed by coupling from the 1D lightguide into the 2D lightguide. Thus, section **50** can be based on a prism coupling into the 1D lightguide as in FIG. 1A, or a reflective coupling as in FIG. 1B, or combinations of both as in FIG. 6B. Combining the images from MLED monochrome image projectors **2a**, **2b**, **2c** and possibly **2d** (see below) into the 1D coupling section **50** can be performed as previously described for coupling into a 1D lightguide, including the tandem coupling of FIGS. 3 and 4 or the embedded dichroic combiner of FIG. 2, or combinations such as in FIG. 5. The 1D section **50** is in turn coupled into the 2D lightguide **110**, as further detailed below.

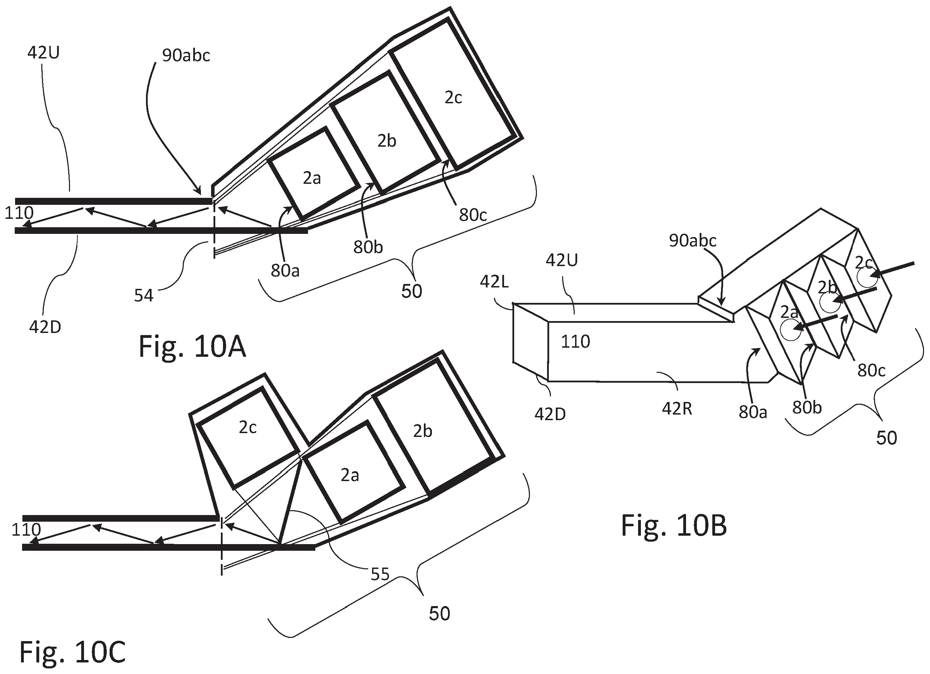

FIGS. 10A and 10B elaborate on one possible embodiment of coupling section **50**. In this case, modules **2a**-**2c** couple into the 1D section **50** through a surface which is a continuation of the rectangular lightguide surface **42R** using a coupling configuration equivalent to FIG. 4. Section **50** has two parallel major surfaces that are continuations of surfaces **42R** and **42L** of lightguide **110**, and is combined into the 2D section **110** at a predetermined angle so that the beams that propagated within section **50** by two-fold internal reflection enter lightguide **110** so as to propagate therein via four-fold internal reflection. The virtual aperture of coupling into **110** is represented as dashed line **54** having a trimming edge **90abc** that is perpendicular to the trimming (or aperture) **80a**-**80c** that trims each separate coupling-in configuration into section **50**. Since aperture **54** (and its trimming edge **90abc**) are common for all of the image projector modules **2a-2c**, for optimal efficiency, each image projector collimating optics preferably has a forward-projected exit aperture that lies at the same plane **54**. This requires that the more distant projector modules have an exit aperture that is further forward-projected, as shown in FIG. 10A, consequently requiring larger-diameter optics.

FIG. 10C shows an alternative implementation of 1D lightguide coupling section **50** that includes an embedded dichroic reflector **55** combining the image light from module **2c** with the image light from modules **2a** and **2b**. This configuration is the same as that of FIG. 5, described above. The dichroic combiner can be introduced from the opposite orientation. Additionally, another dichroic surface can be introduced, employing a configuration equivalent to FIG. 2.

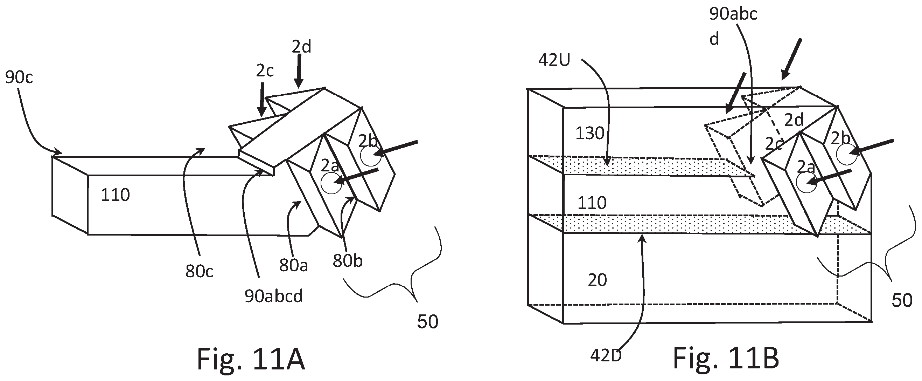

FIG. 11 shows a further embodiment where, to shorten the distance from the projector to the forward-projected aperture **54**, the modules are coupled-in on both sides of the 1D lightguide **50** (equivalent to FIG. 6A). Here four modules are used, where **2d** can be for another color or for projecting infrared illumination which may be needed for eye-tracking applications. FIG. 11B shows specifically how an inert section **130** may be used to protect reflecting surface 42U and to support (or be part of) the 1D section **50**. This implementation is applicable to all 2D lightguides presented here.

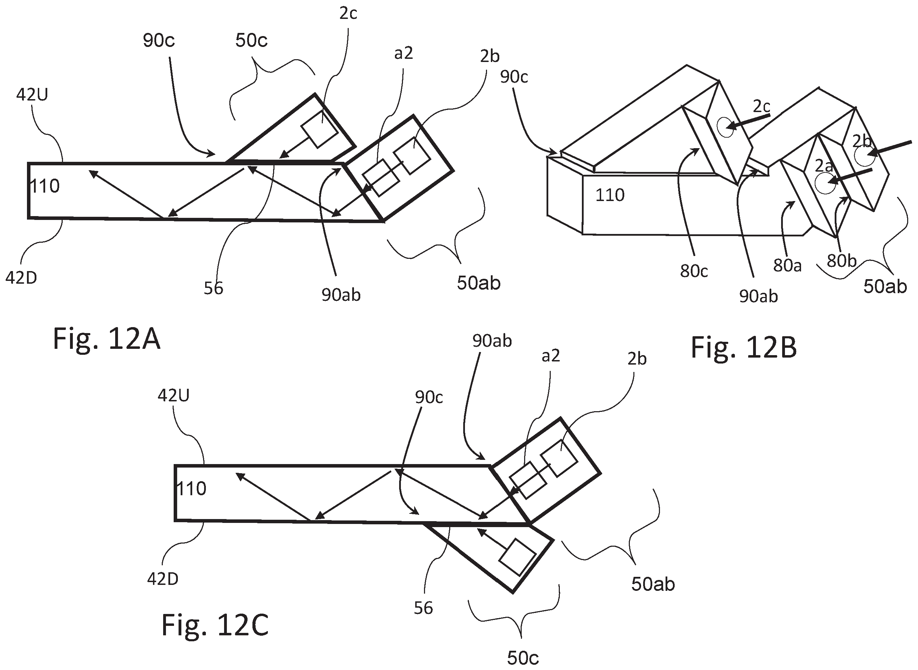

FIGS. 12A-12C show other possibilities to couple MLED array image projectors into 2D lightguide **110**. Here the coupling of module **2c** is done separately. There is a 1D lightguide section **50ab** (with trimming line **90ab**) that couples modules **2a** and **2b** into 2D lightguide **110**, and a distinct 1D lightguide section **50c** (with trimming line **90c**) that couples module **2c** into 2D lightguide **110**. In this case, a dichroic coating is implemented on a surface **56** that is transparent to the color of light projected by module **2c** but reflective to the colors of light projected by modules **2a** and **2b**. Lightguide section **50c** can be coupled to 2D lightguide **110** on any of the external faces of the 2D lightguide, and is not limited to any specific orientation relative to lightguide section **50ab**: it may be coupled to surface **42U** as illustrated in FIG. 12A, to surface **42D** as illustrated in FIG. 12C, to surface **42R** or to surface **42L**.

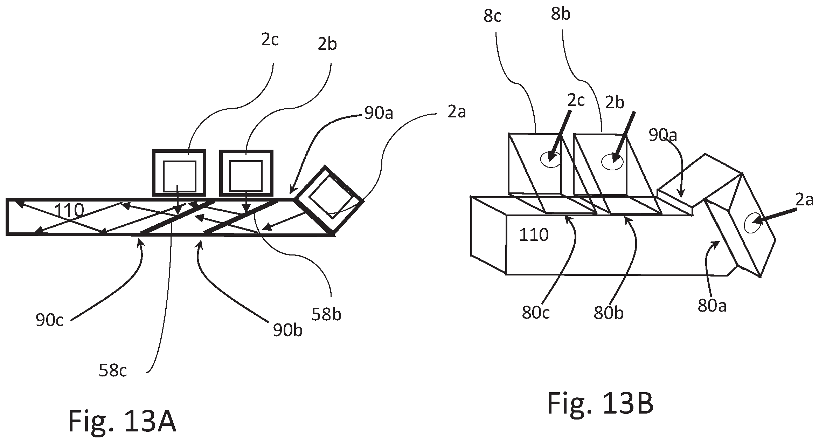

FIGS. 13A and 13B illustrate an alternative approach to coupling monochrome image projectors into a 2D lightguide which employs dichroic facets within the 2D lightguide. Here, module **2a** is coupled in from the end of 2D lightguide **110** as previously described, while modules **2b** and **2c** are coupled-in from the side. First, they enter a coupling prism **8b** and **8c** that has a back surface which is coplanar, or parallel, to the rear surface of lightguide **110**, and the light enters lightguide **110**. Embedded dichroic combiners (facets) **58b** and **58c** then reflect the light so as to co-propagate with the light from module **2a**. In this example, facet **58c** is implemented as a dichroic coating designed to reflects the light from module **2c** and to transmit the light from modules **2b** and **2a**. Facet **58b** is implemented as a dichroic coating designed to reflect the light from module **2b** and transmit the light from module **2a**. Trimming of the incident light from modules **2c** and **2b** is done in one dimension at **80b** and **80c** (as before) while trimming in the other dimension is performed on the edges of the facets: edge **90b** of facet **58b** and edge **90c** of facet **58c**.

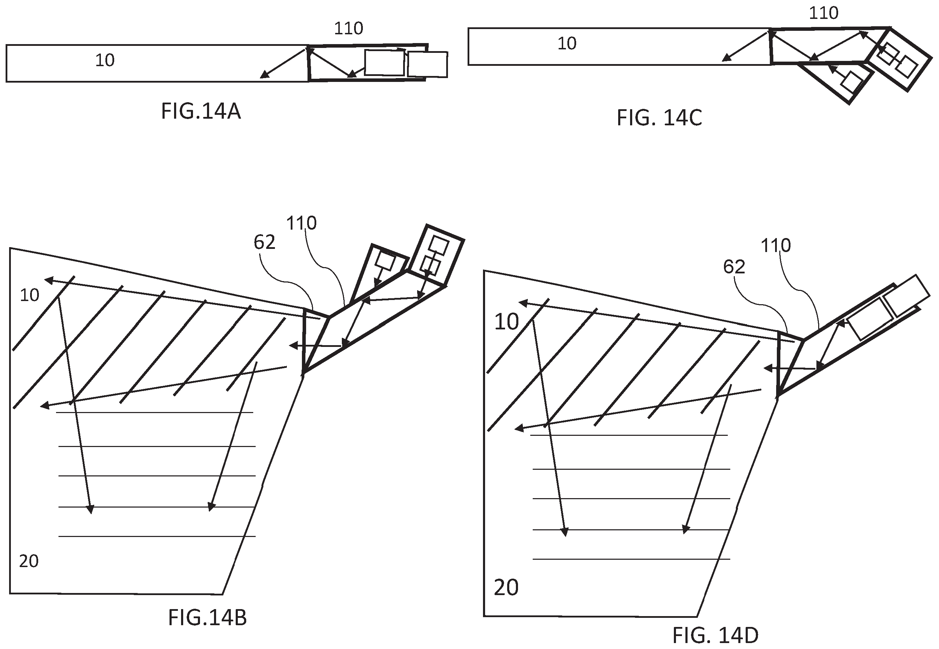

As an alternative to the configuration of FIG. 9A, where light is coupled out of the 2D lightguide laterally by internal partial reflectors, the light propagating within 2D lightguide **110** may instead exit the 2D lightguide from the end, as illustrated in FIGS. 14A-14D. This configuration provides enhanced flexibility in shaping the system to be more ergonomic. In this case, the 2D lightguide **110** is preferably coupled into a 1D lightguide using a coupling prism **62**. Light propagating with lightguide **110** by four-fold internal reflection is converted to two-fold internal reflection within a 1D lightguide without loss of light power. The orientation of modules **2a-2d** can vary as needed. FIGS. 14A-14B show modules **2a-2d** in-plane with the lightguide (using a configuration like FIGS. 12A-12B), while FIGS. 14C-14D show placement of modules **2a-2d** perpendicular to the plane of the 1D lightguide. A combination of orientations and/or the various coupling-in configurations described above is also possible.

In all of the above embodiments, the separate monochrome image projectors need to be carefully aligned in order to achieve correct overlap of the partial images. In certain cases, placement of the projector modules using a purpose-designed jig with suitably-positioned alignment surfaces may be sufficient to achieve the required image overlap. Alternatively, or additionally, a closed-loop alignment process may be implemented using a camera positioned to view the output of the lightguide assembly during placement and fixing of the projector modules. In all cases, a post-assembly fine adjustment is preferably made by adjusting a digital image offset, implemented by display driver **4a** (FIG. 1C), that may be programmed as part of a factory calibration process and/or may be user-adjustable, all as is known in the art.

FIGS. 15A-17 illustrate a further aspect of the present invention according to which a change of angle can be made between a 2D (rectangular) lightguide **110A** (equivalent to **110** above) and another 2D (rectangular) lightguide **110B** or a 1D (slab) lightguide **10** (which appear the same in top view). This change in angle (or "folding") facilitates ergonomic design of the projection system. FIG. 15A shows top view of lightguide **110A** with coupled MLED array image projectors injecting components of an image into the lightguide, which is then coupled out through a coupling-out prism **64A** (which is structurally equivalent to a coupling-in prism). Coupling-in prism **64B** couples the light into 2D lightguide **110B** or to 1D lightguide **10**. By way of one non-limiting exemplary implementation, lightguide **110A** is illustrated with the projector configuration of FIGS. 12A-12B, but this aspect of the present invention can also be used to advantage with any of the other coupling-in configurations described above, or which any conventional image injection arrangement, such as a color image projector based on an LCOS image-generating chip sequentially illuminated by different colors of illumination, or by a scanning intensity-modulated laser beam image projector.

Coupling between lightguide **110A** and lightguide **110B** or **10** is via an optical relay optically coupled between the two lightguides. The optical relay is represented here by two lenses **66A** and **66B**, each of which is typically implemented as a lens arrangement (for example, similar to that illustrated in FIG. 1C). The optical relay relays a collimated image propagating within rectangular lightguide **110A** via a real image plane (between the lenses) to a collimated image propagating within the second lightguide. Additionally, in order to maintain efficiency of light transfer between the lightguides, the optical relay is preferably configured to image an output aperture plane **54A** of the first rectangular lightguide **110A** to an input aperture plane **54B** of the second lightguide **110B** or **10**. Here, as an example, one point on plane **54A** is ray traced to a point on plane **54B**.

Where the two lightguides have similar dimensions, the optical relay advantageously has unit magnification, in which case, the two lenses (or lens arrangements) **66A** and **66B** may advantageously be identical and reversed, making the optical relay optically symmetrical about the real-image plane and thereby cancelling out most optical aberrations. As a result, light-power is not lost and the image is not distorted.

FIG. 15B shows the same functionality as in FIG. 15A but here the refractive optics is replaced by reflecting optics. The optical relay is here implemented using a polarizing beam splitter (PBS) prism **68** having a diagonal PBS **69** with reflective lenses **66A** and **66B** on two faces of the prism. In this case polarization of the light in **110** is preferably controlled to minimize loss. Quarter-wave plates are used in front of each reflective lens in order to manage the sequence of reflection-transmission-reflection at the PBS, as is known in the art.

The views of FIGS. 15A and 15B are schematic top views. In certain preferred implementations, coupling-out prism **64A** can be designed to combine the four-fold beams/images propagating within rectangular lightguide **110A** to a single output beam/image for coupling into the second lightguide, thereby enabling smaller optics **66A** and **66B,** and facilitating an arbitrary orientation between lightguides **110A** and **10/110B**. Alternatively, prism **64A** may be designed to transform the four-fold propagating images to two output images (employing a wedge similar to the coupling-in arrangements for a 1D lightguide). In this case, two images are coupled between the lightguides, orientation must be maintained between the two lightguides and the relay optics **66A/B** will be larger.

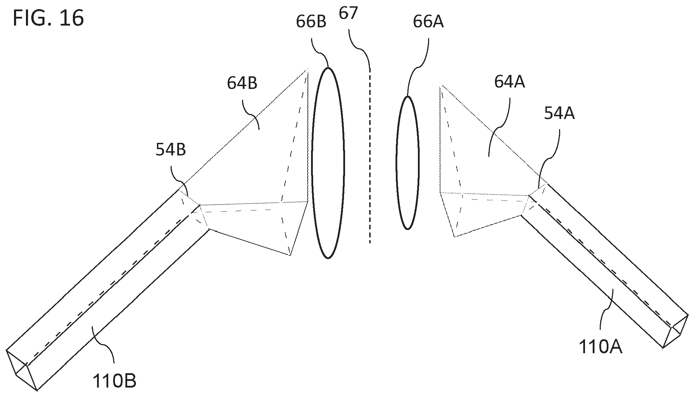

FIG. 16 illustrates schematically an arrangement similar to FIG. 15A in which a corner-configuration coupling-out prism **64A** is used to output a single image from the first rectangular lightguide **110A**, and a similar coupling prism is used for coupling the relayed image into a second rectangular lightguide **110B**. These prisms preferably include two perpendicular surfaces supporting internal reflection which are a coplanar continuation of, or at least parallel to, the corresponding surfaces of rectangular lightguide **110A**, as described in detail in the aforementioned US Patent No. 10,133,070, particularly in FIGS. 6-9B thereof. The non-limiting implementation illustrated here employs unit (1:1) magnification, but transitions from a smaller aperture **54A** in the first lightguide to a larger aperture **54B** in the second lightguide. To assist in filling of the entrance aperture of the second lightguide, a beam spreading element **67** may advantageously be deployed at the real image plane. The beam spreading element is typically a micro-lens array (MLA), or may be a diffuser.

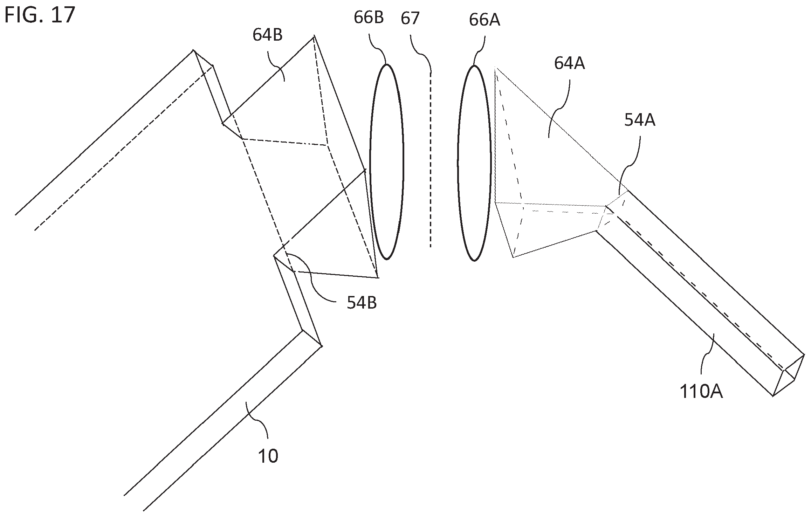

FIG. 17 illustrates a similar configuration in which the second lightguide is a 1D (slab) lightguide **10**, and the coupling-in prism **64B** is correspondingly a simple prism similar to prisms **8**, above, with a single reflector surface parallel to one of the major surfaces of the lightguide.

As mentioned before, the aspect of the present invention illustrated in FIGS. 15A-17 is not limited to any particular type of light source or image generating technology. In addition to the principal example of MLED array monochrome projectors, these configurations can also be used to advantage in cases where the image introduced into lightguide **110A** is formed by a modulated laser with a scanning arrangement, or by a liquid-crystal on silicon (LCOS) chip display, a DLP device, an LCD or any other image generator. The system may employ a separate image projector for each color, separately coupled in to the lightguide as shown, or a single projector generating a color image may be coupled in to lightguide **110A**. Optionally, the different colors injected can be generated by different technologies, for example, employing a green scanning laser combined with red and blue Micro-LED arrays.

If lightguide 10/110B has internal aperture expansion (as exemplified above with reference to the lightguides of FIGS. 2A-9B), then the image from exit aperture **54A** that is projected onto entrance aperture **54B** can be smaller than the size of entrance aperture **54B**. Alternatively, if this image is the same size or larger than entrance aperture **54B**, lightguide **10**/**110B** is illuminated uniformly.

Optionally, optics **66A/66B** can magnify the image at exit aperture **54A** arriving at entrance aperture **54B**, which, for a collimated image, means that the angular range spanned by the field of view is decreased. Such a magnification would also entail an adjustment of angle between lightguide **110A** and lightguide **10/110M**, since longitudinal magnification is the square of the lateral magnification, such that the angle between exit aperture (plane) **54A** and entrance aperture (plane) **54B** will change.

It should be noted that the angle of propagation of the image within lightguide **110A** (relative to the axes of the lightguide) is not necessarily the same as the angle of propagation of the image within lightguide **10** or **110B**, so long as the entire field of view of the image is contained within the angular range for internal reflection and does not cross the plane(s) of symmetry of the lightguide. Use of different angles of propagation within the lightguides provides further design flexibility by allowing adjustment of the angle between the lightguides.

In certain preferred implementations, lightguides **110A** and **10/110B** are mechanically separated, and can be implemented so as to allow folding of lightguide **110A** relative to lightguide **10/110B**. Implementation of lightguide **110A** as part of a glasses frame temple (or side), with a hinge or other folding mechanism, facilitates compact storage of the glasses.

It will be appreciated that the above descriptions are intended only to serve as examples, and that many other embodiments are possible within the scope of the present invention as defined in the appended claims.

## Claims

1. A lightguide arrangement comprising:
(a) a first rectangular lightguide having a first pair of parallel surfaces and a second pair of parallel surfaces that are perpendicular to said first pair of parallel surfaces for supporting propagation of light by four-fold internal reflection, said first rectangular lightguide having a first direction of extension parallel to a line of intersection between one of said first pair of parallel surfaces and one of said second pair of parallel surfaces;
(b) a second lightguide having at least a first pair of parallel surfaces for supporting propagation of light by internal reflection, said first pair of parallel surfaces being non-parallel to said first direction of extension; and
(c) an optical relay optically coupled between said first rectangular lightguide and said second lightguide, said optical relay relaying a collimated image propagating within said first rectangular lightguide via a real image plane to a collimated image propagating within said second lightguide.

2. The lightguide arrangement of claim 1, wherein said optical relay is configured to image an output aperture plane of said first rectangular lightguide to an input aperture plane of said second lightguide.

3. The lightguide arrangement of claim 1, wherein said optical relay has unit magnification.

4. The lightguide arrangement of claim 1, wherein said optical relay is optically symmetrical about said real image plane.

5. The lightguide arrangement of claim 1, wherein said optical relay is optically coupled to each of said first rectangular lightguide and said second lightguide via a coupling prism.

6. The lightguide arrangement of claim 1, wherein said optical relay includes a polarizing beam splitter prism with reflective lenses on two faces of said prism.

7. The lightguide arrangement of claim 1, wherein said second lightguide is a rectangular lightguide having a second pair of mutually-parallel major surfaces that are perpendicular to said first pair of major surfaces for supporting propagation of light by four-fold internal reflection.

8. The lightguide arrangement of claim 1, wherein said optical relay further comprises a beam spreading element deployed at said real image plane.
